Europäisches Patentamt

European Patent Office

Office européen des brevets

(19)

(11) Numéro de publication: **0 231 695 B1**

(12) **FASCICULE DE BREVET EUROPEEN**

(45) Date de publication du fascicule du brevet:
24.10.90

(51) Int. Cl.⁵: **G01K 17/00**

(21) Numéro de dépôt: 86402818.8

(22) Date de dépôt: 16.12.86

(54) **Calorimètre quasi-adiabatique servant à mesurer l'énergie transportée par un rayonnement.**

(30) Priorité: 19.12.85 FR 8518853

(43) Date de publication de la demande:
12.08.87 Bulletin 87/33

(45) Mention de la délivrance du brevet:
24.10.90 Bulletin 90/43

(84) Etats contractants désignés:
BE DE FR GB LU NL

(56) Documents cités:
FR-A- 2 050 603
US-A- 3 641 346

JOURNAL OF PHYSICS E. SCIENTIFIC INSTRUMENTS,
vol. 6, no. 6, janvier 1973, pages 559-560, London, GB; P.
BOULANGER et al.: "An absolute calorimeter for high
power CO2 laser"
ELECTRO-OPTICAL SYSTEMS DESIGN,
vol. 14, no. 12, décembre 1982, pages 35-46, Chicago,
Illinois, US; McCORMICK: "Laser power meters"

(73) Titulaire: COMMISSARIAT A L'ENERGIE ATOMIQUE,
31/33, rue de la Fédération, F-75015 Paris(FR)

(72) Inventeur: Bourgade, Jean-Luc, 88, rue Marceau,
F-91800 Brunoy(FR)
Inventeur: Le Guen, Michel, 5, Allée de la Fosse aux
Biches, F-94440 Villecresnes(FR)
Inventeur: Saleres, Alain, 17, rue Chappe,
F-93160 Noisy-le-Grand(FR)

(74) Mandataire: Mongrédien, André et al, c/o
BREVATOME 25, rue de Ponthieu, F-75008 Paris(FR)

## Description

La présente invention a pour objet un calorimètre servant à mesurer l'énergie transportée par un rayonnement électromagnétique (lumineux, X, laser... ) ou par un flux de particules. Plus particulièrement, elle trouve son application en optoélectronique dans la mesure de l'énergie photonique impulsionnelle transportée par un rayonnement laser.

On connaît des calorimètres dans lesquels on mesure l'augmentation de température engendrée par l'interaction d'un rayonnement électromagnétique et d'un matériau apte à absorber ce rayonnement et on déduit de cette mesure l'énergie transportée par le rayonnement. Généralement, de tels calorimètres comprennent un élément absorbant le rayonnement ayant une face externe exposée au rayonnement et une face interne. L'élément absorbant subit une augmentation de température lors de l'interaction avec le rayonnement. Une thermopile ayant une face de mesure en contact avec la face interne de l'élément absorbant et une face de référence maintenue à une température de référence, délivre une différence de potentiel proportionnelle à la différence de température entre ses faces de mesure et de référence. Ces calorimètres sont généralement équipés de moyens d'étalonnage qui peuvent consister en un fil résistif collé sur la face interne de l'élément absorbant ou à la périphérie de celui-ci. Le rôle de ce fil est de simuler un dépôt d'énergie de valeur bien déterminée en échauffant par passage du courant électrique l'élément absorbant et de permettre ainsi l'étalonnage du calorimètre. Le document FR-A 2 050 603 et l'article paru dans Journal of Physics E; Scientific Instruments, Vol. 6, N° 6, Janvier 1973, pages 559-560, Londres, GB; P. BOULANGER et Al.: "An absolute calorimeter for high power $CO_2$ laser" décrivent des calorimètres de ce type.

De tels calorimètres présentent plusieurs inconvénients: tout d'abord, la sensibilité est faible parce que la thermopile couvre la quasi totalité de la face interne de l'élément absorbant et présente ainsi une forte capacité calorifique vis-à-vis de celle de l'élément absorbant. De plus, l'étalonnage est peu faible parce que la simulation du dépôt d'énergie par échauffement électrique du fil résistif est imparfaite, le fil ne couvrant qu'une faible partie de la face interne de l'élément absorbant ou étant placé sur le pourtour de celui-ci. Enfin, l'étalonnage est difficile et peu reproductible parce que l'opération d'assemblage du fil sur la face interne ou sur le pourtour de l'élément absorbant à partir d'une colle est une opération délicate et peu efficace, le fil pouvant se décoller par endroits.

Le but de la présente invention est de remédier à ces inconvénients en proposant un calorimètre ayant une grande sensibilité et un étalonnage facilement reproductible permettant de simuler de façon presque parfaite un dépôt d'énergie dans l'élément absorbant.

De façon plus précise, l'invention a pour objet un calorimètre servant à mesurer l'énergie transportée par un rayonnement, comprenant, de façon connue:

– un élément absorbant, apte à absorber ledit rayonnement, ayant une face externe exposée à ce rayonnement et une face interne, cet élément subissant une augmentation de température lors de l'interaction avec ledit rayonnement;

– des moyens pour mesurer cette augmentation de température, ces moyens de mesure occupant une partie de la surface de la face interne de l'élément absorbant; et

– une résistance d'étalonnage simulant un apport d'énergie sur la face interne de l'élément absorbant.

Selon l'invention, les moyens de mesure sont en contact avec ladite face interne et la résistance d'étalonnage se présente sous la forme d'un revêtement en matériau résistif déposé sur la partie de la surface de la face interne de l'élément absorbant non utilisée par les moyens de mesure, ce revêtement étant en contact direct avec ladite face interne de l'élément absorbant sur au moins 50% de la surface de celle-ci.

De préférence, le revêtement ou dépôt résistif est en contact direct avec la face interne de l'élément absorbant sur au moins 70% de la surface de celle-ci et, dans des calorimètres qui ont été réalisés, le dépôt résistif couvre environ 80% de cette surface. Ce dépôt résistif peut comprendre au moins une bande continue homogène pouvant être alimentée en courant et ayant un rapport longueur sur largeur de l'ordre de 100.

Selon un mode de réalisation préféré du calorimètre objet de l'invention, le matériau constitutif du dépôt résistif comprend au moins une encre conductrice apte à être polymérisée.

Selon un autre aspect de l'invention, les moyens pour mesurer l'augmentation de température de l'élément absorbant comprennent:

– au moins une thermopile ayant une face de mesure en contact avec la face interne de l'élément absorbant et une face de référence, cette thermopile occupant au plus 20% de la surface de la face interne de l'élément absorbant;

– des moyens pour maintenir la face de référence de la thermopile à une température de référence; et

– des moyens pour mesurer la tension aux bornes de la thermopile engendrée lors de l'interaction du rayonnement et de l'élément absorbant.

Cette thermopile peut être par exemple une thermopile semiconductrice.

Selon un mode particulier de réalisation de l'invention, les moyens pour maintenir la face de référence de la thermopile à une température de référence comprennent un élément en contact avec ladite face de référence, cet élément ayant une masse au moins cinq fois supérieure à celle de la thermopile.

Selon un autre aspect de l'invention, l'élément absorbant comprend:

– une première couche d'un matériau apte à absorber le rayonnement, par exemple une couche de verre, cette première couche ayant une face externe exposée au rayonnement et une face interne; et

– une seconde couche d'un matériau de conduction thermique latérale disposée entre la première couche et la thermopile, cette seconde couche étant en contact avec la face interne de la première couche et avec la face de mesure de la thermopile.

Selon un autre aspect de l'invention, une couche isolante mince est insérée entre l'élément absorbant, sur sa face interne, et le dépôt résistif voir la revendication indépendante 11.

Cette disposition est surtout utile dans le cas où la partie de l'élément absorbant correspondant à la face interne est métallique, par exemple dans le cas mentionné ci-dessus où l'élément absorbant est constitué d'une première couche en un matériau tel que le verre et où le matériau de conduction thermique latérale constituant la deuxième couche est du métal. Dans ce cas, le métal est oxydé en surface sur une faible profondeur (de l'ordre de 10 à 20 micromètres) avant le dépôt de la résistance d'étalonnage: celle-ci ne se trouve donc pas en contact direct avec le métal, mais avec l'oxyde (qui est un isolant électrique) et on évite ainsi les courts-circuits.

Le calorimètre objet de l'invention peut comporter une pluralité de thermopiles ayant chacune une face de mesure et une face de référence, la face de mesure étant en contact avec la face interne de l'élément absorbant, l'ensemble des thermopiles couvrant au plus 20% de la surface interne de l'élément absorbant.

La présente invention a également pour objet un procédé de réalisation d'un tel calorimètre. Selon la principale caractéristique de ce procédé, la résistance d'étalonnage est déposée par sérigraphie. Selon une autre caractéristique de ce procédé, les première et seconde couches de l'élément absorbant sont assemblées par une couche de colle thermoconductrice déposée par sérigraphie.

Le calorimètre objet de l'invention peut être utilisé notamment pour la mesure de l'énergie photonique impulsionnelle transportée par un rayonnement ayant une longueur d'onde allant de 0,3 μm à 2 μm.

D'autres caractéristiques et avantages de l'invention ressortiront de la description qui va suivre, donnée à titre purement illustratif mais non limitatif, en référence aux dessins annexés, dans lesquels :

- la figure 1 est une vue schématique en coupe de l'ensemble d'un calorimètre selon l'invention, placé dans un boîtier,
- la figure 2 est une vue schématique en perspective et partiellement en coupe des éléments constitutifs essentiels du calorimètre selon l'invention,
- la figure 3 est une vue schématique de dessous montrant une disposition possible du dépôt résistif et de la thermopile du calorimètre selon l'invention,
- la figure 4 est une vue semblable à la figure 3 montrant comment on peut placer plusieurs thermopiles sur la face interne de l'élément absorbant,
- la figure 5 représente la forme du signal délivré par le calorimètre,
- la figure 6 illustre un mode particulier de réalisation d'un circuit de traitement du signal délivré par le calorimètre,

- les figures 7a et 7b sont respectivement une vue schématique en coupe de l'élément absorbant d'un calorimètre selon l'invention avec sa thermopile et un graphe donnant la réponse de ce calorimètre à des impulsions photoniques et électriques,
- les figures 8a et 8b sont des vues correspondant aux figures 7a et 7b pour un type de calorimètre de l'art antérieur, et
- les figures 9a et 9b sont des vues correspondant aux figures 7a et 7b pour un autre type de calorimètre de l'art antérieur.

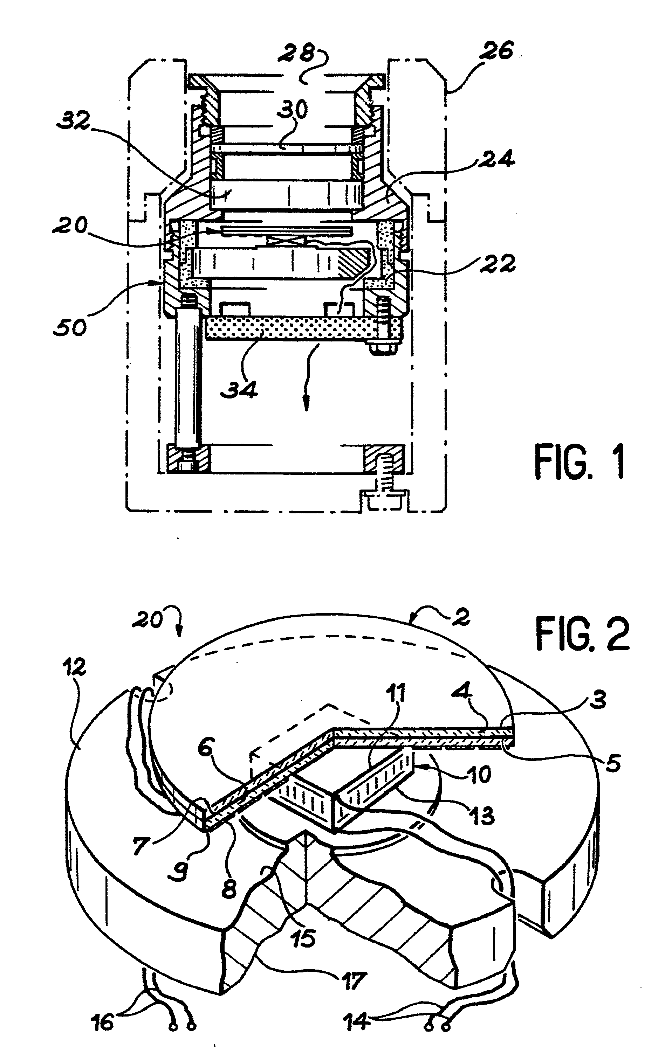

En se référant à la figure 1, on voit que le calorimètre objet de l'invention, portant la référence générale 20, est placé dans un boîtier 50 et est encastré sur une entretoise isolante 22 maintenant le calorimètre 20 dans une position stable et invariable. L'entretoise 22 est recouverte d'une enveloppe métallique 24.

La partie supérieure du boîtier 50 comprend une ouverture centrale 28 s'étendant jusqu'au calorimètre 20 pour permettre au rayonnement incident d'interagir avec celui-ci. Un verre de protection 30 bouche l'ouverture centrale 28 pour protéger le calorimètre des atmosphères corrosives pendant les périodes de non utilisation. Une bague entretoise 32, sur laquelle on peut placer un filtre, est disposée entre le verre de protection 30 et le calorimètre 20.

La face inférieure du boîtier 50 est constituée d'un écran 34 en plomb destiné arrêter les rayonnements parasites lorsqu'on mesure l'énergie transportée par un rayonnement X qui comporte une composante dure. Le boîtier 50 peut être recouvert d'une enveloppe isolante 26 le protégeant des fluctuations de température du milieu ambiant, ce qui rend le calorimètre quasi-adiabatique.

En se référant à la figure 2, on voit que le calorimètre 20 comprend tout d'abord un élément absorbant 2. Cet élément a une face externe 3 exposée au rayonnement incident et une face interne 9, cet élément absorbant 2 subissant une augmentation de température lors de l'interaction avec le rayonnement. Dans le cas particulier représenté ici (calorimètre à photons), l'élément absorbant 2 comprend une première couche 4 d'un matériau apte à absorber le rayonnement ayant une face externe 3 exposée au rayonnement et une face interne 5 et une seconde couche 6 d'un matériau de conduction thermique latérale ayant une face externe 7 en contact avec la face interne 5 de la première couche 4 et une face interne 9. Dans la présente description, on appellera "face externe" de l'élément absorbant 2 ou des couches qui le constituent la face de ces éléments qui se trouve du côté par où arrive le rayonnement à étudier et "face interne" l'autre face. Le matériau de la première couche 4 peut être un verre absorbant ayant pour rôle de subir une augmentation de température lors de l'interaction avec le rayonnement lumineux. Le matériau de la seconde couche 6 a pour rôle d'égaliser rapidement les hétérogénéités de température de la première couche 4. En effet, le rayonnement incident n'est pas toujours homogène et peut créer des points chauds dans la masse de la première couche 4. La seconde couche 6 doit être bon conducteur de la chaleur et posséder une adhérence parfaite avec les éléments qui sont en contact avec ses faces externe 7 et interne 9. Il doit par ailleurs présenter une isolation électrique suffisante à l'égard des éléments en contact avec sa face interne 9, c'est-à-dire la thermopile 10 qui sera décrite ultérieurement et le dépôt résistif 8.

Pour répondre à ces exigences, le matériau de la seconde couche 6 peut être une céramique ou un autre matériau possédant la propriété d'être à la fois bon conducteur de la chaleur et isolant électriquement. Le matériau de la seconde couche 6 peut être également un métal, un alliage ou un matériau chargé qui sont bons conducteurs de la chaleur et de l'électricité et pour lesquels un dépôt d'une couche isolante est nécessaire sur la face interne 9. La deuxième couche 6 peut être réalisée sous la forme d'une ou plusieurs feuilles minces directement collées sur la face interne 5 de la première couche 4. On peut également obtenir la seconde couche 6 par l'une des techniques de dépôt suivantes : évaporation sous vide, pulvérisation ou dépôt chimique en phase vapeur ou encore polymérisation pour les produits chargés.

A titre d'exemple, on a realisé un calorimétre selon l'invention destiné à la mesure de l'énergie transportée par un rayonnement laser ayant une longueur d'onde allant de 0,3 μm à 2 μm. Dans cet exemple, les première et seconde couches 4 et 6 de l'élément absorbant 2 sont de forme circulaire et ont une épaisseur voisine de 0,5 mm et un diamètre de l'ordre de 30 mm chacune. La première couche 4 est un verre comme celui vendu par la Société Schott sous la référence NG1 et la seconde couche 6 est une pastille d'aluminium préalablement aluminitée sur sa face ex terne 7. L'obtention d'une mince couche d'alumine (10 à 20 micromètres d'épaisseur) peut se faire par exemple par oxydation anodique. La couche ainsi obtenue est une couche électriquement isolante, ce qui évite les courts-circuits entre la résistance d'étalonnage et la couche métallique, mais elle est bonne conductrice de la chaleur : ainsi, la chaleur dégagée par effet Joule dans la résistance d'étalonnage est transmise rapidement à l'élément absorbant.

La couche de verre et la couche métallique sont assemblées au moyen d'une couche de colle thermoconductrice, chargée de bore, et déposée par sérigraphie de façon uniforme sur la face externe 7 de la seconde couche 6. Cette technique permet d'obtenir une épaisseur de colle de l'ordre de 50 à 100 μm et facilite la reproduction de cet assemblage.

Il est bien entendu que ceci n'est qu'un exemple de réalisation et que l'on pourrait tout aussi bien, sans sortir du cadre de l'invention, réaliser les couches de l'élément absorbant 2 sous une forme et une nature différentes et les assembler par une autre technique.

Dans le cas d'une mesure d'énergie transportée par un flux de particules ou de rayonnement X, la première couche de verre 4 peut être supprimée puisque les métaux absorbent les ions et le rayonnement X et réfléchissent les photons alors que le verre absorbe également les photons. Il ne subsiste donc que la couche 6 qui sert à la fois d'absorbant et d'égaliseur thermique.

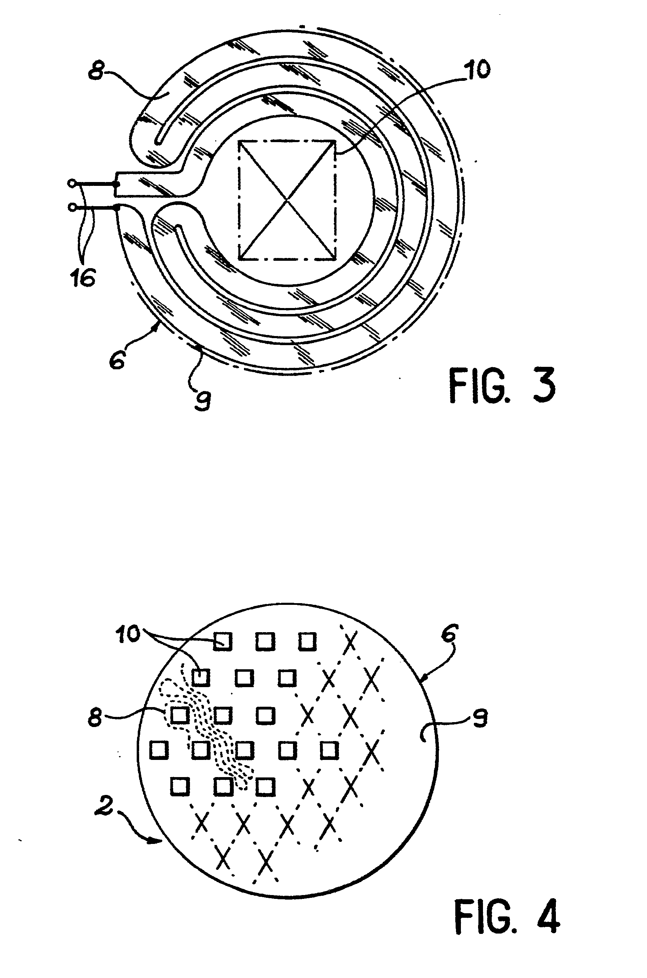

En 8 est représenté le dépôt résistif en bande qui sert à l'étalonnage du calorimètre selon l'invention et qui couvre une partie de la face interne 9 de la seconde couche 6 de l'élément absorbant 2. Dans une disposition possible de la résistance 8, re présentée en figure 3, on voit que la résistance 8 couvre sous forme d'une bande continue et homogène environ 80% de la surface de la face interne 9 de la seconde couche 6. Dans le calorimètre qui a été réalisé, le rapport longueur sur largeur de la résistance 8 est de l'ordre de 100. La largeur de la bande était d'environ 2 mm et la distance radiale entre deux parties concentriques de cette bande de 0,5 mm environ. La thermopile 10, que l'on va décrire ultérieurement, occupe la partie centrale de la face interne 9 de la seconde couche 6, qui n'est pas occupée par le dépôt résistif 8. Bien entendu, ceci est une disposition préférentielle de la résistance, mais on pourrait tout aussi bien, sans sortir du cadre de l'invention, disposer la résistance sous une forme différente.

L'étalonnage du calorimètre est obtenu par chauffage électrique de cette résistance 8, ce qui simule par effet Joule un dépôt d'énergie dans l'élément absorbant 2. la simulation se rapproche d'autant plus de l'interaction rayonnement-élément absorbant 2 que la résistance 8 couvre le maximum de la surface de la face interne 9 de la seconde couche 6 et que son épaisseur est faible.

Selon un mode préféré de réalisation, la résistance 8 est déposée par un procédé d'impression sérigraphique. Dans l'exemple qui a été réalisé, on a utilisé comme matériau constitutif de la résistance 8 un mélange d'encres conductrices polymérisables à une température voisine de 150°C. Le produit utilisé était constitué par un polymère auquel étaient ajoutées une première encre conductrice chargée à l'argent et une deuxième encre résistive chargée de palladium. On a ainsi obtenu une bande continue homogène ayant une résistance voisine de 50Ω. Cette bande ayant une longueur 100 fois plus importante que sa largeur, la ré sistance par carré était de 0,5Ω. La résistance par carré est définie comme la résistance d'un élément de la bande dont la longueur est égale à la largeur. L'impression sérigraphique offre la possibilité de varier facilement et dans de larges proportions la forme et la valeur résistive de la résistance 8. Elle permet de reproduire de façon précise et à faible coût le dépôt résistif dans le cas d'une production en série du calorimètre. Enfin, la toile sérigraphique détermine l'épaisseur de la couche résistive 8 : on peut ainsi obtenir une résistance 8 ayant une épaisseur de l'ordre de 100 μm. En fait, l'épaisseur de la couche 8 est déterminée en fonction de la forme et de la valeur de la résistance qu'on veut obtenir : on ne sortirait pas du cadre de l'invention en utilisant une autre forme que celle illustrée à la figure 3 ou en utilisant des épaisseurs différentes. On ne sortirait pas non plus du cadre de l'invention en modifiant le mélange d'encres et de polymère en fonction de la géométrie souhaitée pour la bande 8 et de la valeur de la résistance qu'on veut obtenir.

Comme représenté sur la figure 2, la thermopile 10 a une face de mesure 11 en contact avec la face interne 9 de la seconde couche 6 et une face de référence 13. De préférence, la thermopile 10 occupe au plus 20% de la surface de la face interne 9 de la seconde couche 6.

Dans l'exemple qui a été réalisé, on a utilisé une thermopile de forme rectangulaire et de dimensions de l'ordre de 11,5 mm×9 mm possédant 132 thermocouples. La seconde couche 6 et la thermopile 10 sont assemblées par la même technique que celle employée pour l'assemblage des deux couches de l'élément absorbant 2.

L'utilisation d'une thermopile au lieu d'un simple thermocouple présente l'avantage d'avoir une sensibilité beaucoup plus grande. En effet, les inventeurs ont constaté qu'avec un calorimètre selon l'invention équipé d'une thermopile, on obtenait une sensibilité de l'ordre de 10 millivolts par Joule alors qu'avec des calorimètres équipés d'un simple thermocouple, la sensibilité était de l'ordre de 5 microvolts par Joule seulement.

En 12 est représenté un élément thermique maintenant la face de référence 13 de la thermopile 10 une température de référence. L'élément 12 a une face externe 15 en contact avec la face de référence 13 et une face interne 17. De préférence, l'élément thermique 12 possède une masse au moins 5 fois supérieure à celle de l'ensemble de l'élément absorbant 2 et de la thermopile 10 afin que la capacité thermique de l'élément 12 soit grande vis-à-vis de celle de l'élément absorbant 2 et de la thermopile 10. Ainsi, la température de la face de référence 13 reste stable malgré l'augmentation de la température de l'élément absorbant 2. Par ailleurs, la chaleur transmise par l'augmentation de température de l'élément absorbant 2 via la thermopile est diffusée très rapidement dans toute la masse de l'élément 12 grâce à la conductivité élevée de cet élément. Dans l'exemple réalisé, l'élément thermique 12 a la forme d'un disque d'aluminium de diamètre 46 mm et d'epaisseur 8 mm environ. La thermopile 10 et l'élément thermique 12 sont assemblés également par la même technique que celle employée pour l'assemblage des deux couches de l'élément absorbant 2.

La figure 4 montre comment on peut placer plusieurs thermopiles 10 sur la face interne 9 de l'élément absorbant 2, les thermopiles étant régulièrement réparties et couvrant au plus 20% de la surface de la face 9. Le dépôt résistif d'étalonnage 8 se présente de préférence sous la forme d'une ou plusieurs bandes continues homogènes disposées entre les thermopiles 10 de manière à couvrir le plus possible de la surface non occupée par les piles. Le fonctionnement d'un tel dispositif est le même que dans le cas d'un calorimètre ne comportant qu'une seule thermopile, car les thermopiles 10 sont connectées en série.

Le principal avantage de l'utilisation de plusieurs thermopiles est qu'on peut réaliser un calorimètre de grandes dimensions (plusieurs centimètres de diamètre pour l'élément absorbant et même davantage) : en effet, un tel calorimètre peut être considéré comme un ensemble de calorimètres plus petits ayant chacun une seule thermopile.

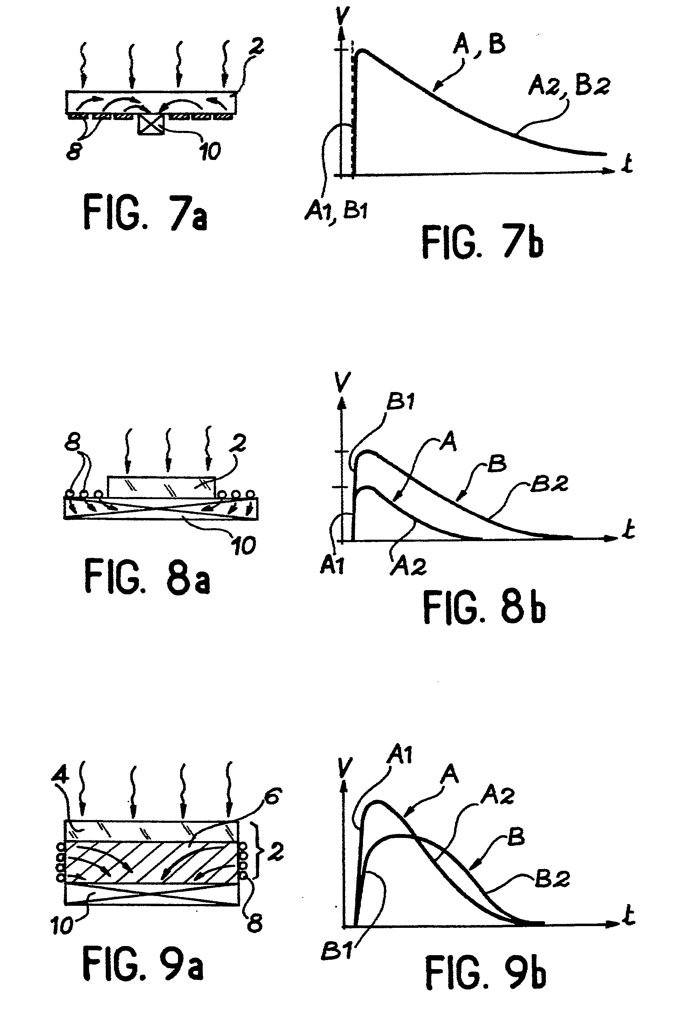

Le principal avantage du calorimètre objet de l'invention est que la réponse à une impulsion électrique est pratiquement la même que la réponse à une impulsion photonique ayant pour effet de déposer la même quantité d'énergie. Ce n'est pas le cas avec les calorimètres de l'art antérieur, comme cela est illustré aux figures 7a à 9b.

La figure 7a représente les éléments essentiels d'un calorimètre selon l'invention, savoir l'élément absorbant 2 avec, sur sa face interne, le dépôt résistif d'étalonnage 8 et la thermopile 10. On a réalisé des essais avec un calorimètre conforme à celui décrit ci-dessus et illustré aux figures 1 à 3. Il a été soumis pendant 10 millisecondes à un faisceau laser réglé de sorte que la densité d'énergie reçue par l'élément absorbant soit de $2,57.10^{-2}$ J/cm². La courbe A de la figure 7b donne, en fonction du temps t, la tension V recueillie aux bornes de la thermopile : on voit que cette courbe comporte une première partie ascendante A1 de forte pente (le maximum est atteint au bout d'une à deux secondes) suivie d'une partie descendante A2 d'allure exponentielle correspondant à la période de refroidissement après l'impulsion. Dans l'expérience qui a été réalisée, la constante de temps de la partie A2 de la courbe A était de 32 secondes, c'est-à-dire que la tension V aux bornes de la thermopile variait comme $e^{-t/32}$, t étant le temps exprimé en secondes. La tension V s'annule au bout d'une durée de l'ordre de 2 à 3 minutes.

On a ensuite envoyé dans la résistance 8, pendant 10 millisecondes, un courant réglé de sorte que la densité d'énergie reçue par l'élément absorbant soit, comme précédemment, de $2,57.10^{-2}$ J/cm². On a mesuré la tension aux bornes de la thermopile et obtenu une courbe B pratiquement identique à la courbe A.

Il n'en est pas de même avec les calorimètres de l'art antérieur comme, par exemple, celui qui est illustré à la figure 8a. On retrouve bien un élément absorbant 2 et une thermopile 10 sur la face interne de celui-ci, mais la thermopile 10 est plus grande que l'élément 2 et la résistance d'étalonnage 8 se présente sous la forme d'un fil collé sur la face de mesure de la thermopile, dans la partie qui n'est pas en contact avec l'élément absorbant. La courbe A de la figure 8b représente la tension aux bornes de la thermopile pour une impulsion photonique et la courbe B pour une impulsion électrique, l'énergie reçue par l'élément absorbant étant la même : les courbes A et B ont la même allure avec une partie ascendante de forte pente (A1, B1) et une partie descendante d'allure exponentielle (A2, B2), m is les maxima ne sont pas les mêmes : le maximum de la courbe B est supérieur au maximum de la courbe A. Les inventeurs ont constaté, dans ce cas, une sensibilité de l'ordre de 4 millivolts par Joule pour une impulsion photonique et de l'ordre de 7 millivolts par Joule pour une impulsion électrique.

La figure 9a illustre un autre type de calorimètre de l'art antérieur dans lequel l'élément absorbant 2 se compose d'une couche de verre 4 et d'une couche métallique 6. La thermopile 10 occupe la totalité ou une grande partie de la face interne de l'élément absorbant 2 et la résistance 8 se présente sous la forme d'un fil collé sur le bord périphérique de la couche 6 et non pas sur la face interne de l'élément absorbant. La courbe A de la figure 9b représente la tension aux bornes de la thermopile en réponse à une impulsion photonique : on retrouve encore la même allure avec la partie ascendante A1 de forte pente et la partie descendante A2 d'allure exponentielle. La courbe B de la figure 9b représente la réponse du calorimètre à une impulsion électrique, pour une énergie déposée égale : on constate que la partie ascendante B1 a une pente moins forte que la partie A1 et que le maximum de la courbe B est inférieur à celui de la courbe A.

Ces différences entre l'invention et l'art antérieur s'expliquent de la manière suivante :

Dans un calorimètre selon l'invention (figure 7a), la résistance d'étalonnage se présente sous la forme d'un revêtement déposé sur la face interne de l'élément absorbant et couvrant une grande partie de celle-ci. De plus, la résistance 8 se trouve sur une partie de la face interne de l'élément absorbant non occupée par la thermopile. Ainsi, la chaleur dégagée dans la résistance 8 par le passage d'un courant est transmise très rapidement l'élément absorbant et chauffe la masse de celui-ci avant d'atteindre la thermopile. L'effet est donc le même que si la même quantité d'énergie était déposée par l'intermédiaire d'un rayonnement frappant la face externe de l'élément absorbant.

Dans le cas de la figure 8a, la résistance d'étalonnage est placée directement sur la face de mesure de la thermopile, dans la zone de cette face située à l'extérieur de l'élément absorbant. La chaleur dégagée par le passage d'un courant est donc transmise directement à la thermopile et ne chauffe pas l'élément absorbant. Si la même énergie était apportée par un rayonnement, il y aurait d'abord échauffement de l'élément absorbant et donc une augmentation de température de la thermopile plus faible. Ceci explique que le maximum de la courbe A soit inférieur au maximum de la courbe B (figure 8b) et il est donc nécessaire de faire des corrections lorsqu'on veut étalonner le calorimètre.

Dans le cas de la figure 9a, l'énergie apportée par un rayonnement chauffe d'abord l'élément absorbant 2, puis la thermopile 10. Si la même énergie est apportée par la résistance 8, la chaleur met plus de temps à traverser la couche métallique 6 car elle vient de la périphérie de cette dernière. D'autre part, il y a des pertes notamment parce qu'une partie de cette énergie est utilisée à chauffer la couche de verre 4. Ceci explique d'une part que la pente de la partie B1 de la courbe B (figure 9b) soit moins forte que la pente de la partie A1 de la courbe A et aussi que le maximum de la courbe B soit inférieur au maximum de la courbe A : là aussi, il est nécessaire de faire des corrections lorsqu'on veut étalonner le calorimètre.

Avec la présente invention, ces corrections sont inutiles puisqu'une quantité d'énergie déposée par voie électrique produit le même effet que la même quantité d'énergie déposée par voie photonique.

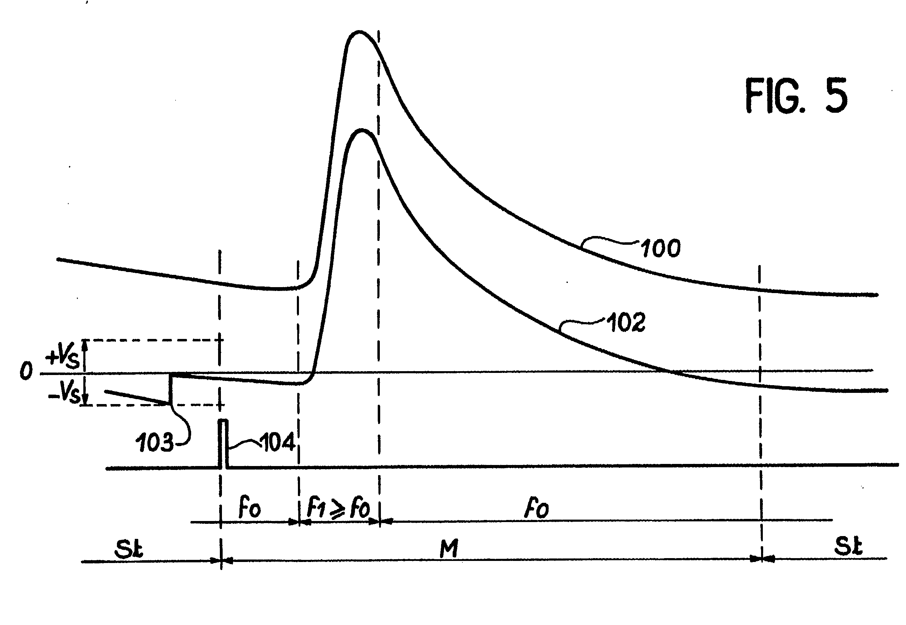

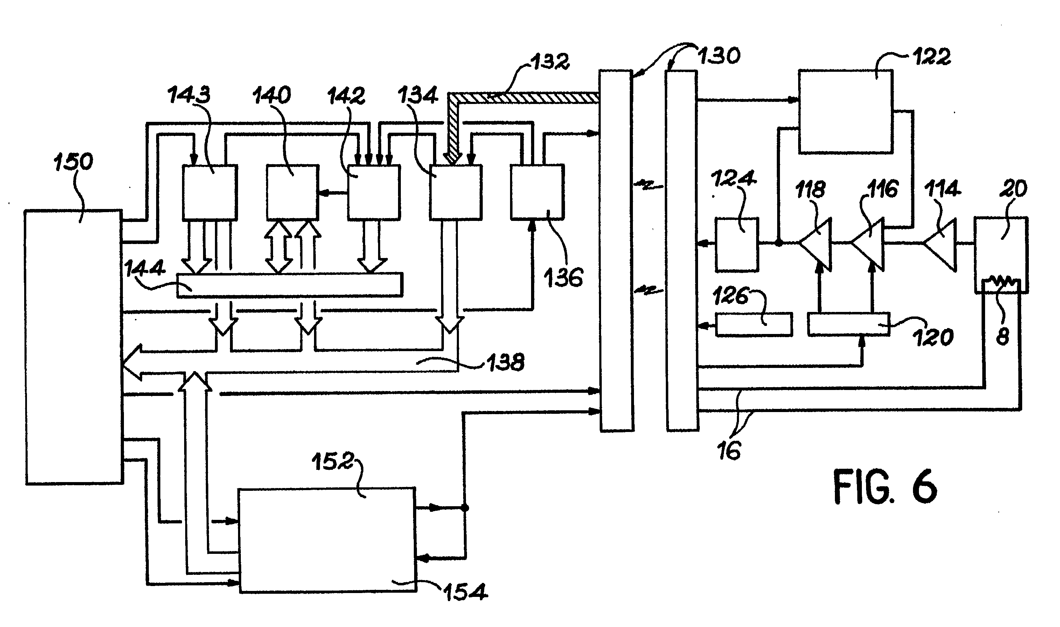

Les fils 14 (figure 2) servent à relier les bornes de la thermopile 10 à un appareil de mesure qui traite le signal délivré par la thermopile tandis que les fils 16 servent à relier les bornes de la résistance d'étalonnage 8 à une alimentation en courant qui sert à appliquer une énergie de l'ordre de quelques millijoules à la résistance. Ces appareils vont maintenant être décrits en référence aux figures 5 et 6.

La figure 5 représente l'allure de la tension délivrée par le calorimètre qui vient d'être décrit. Cette tension croît rapidement, puis passe par un maximum et enfin décroît exponentiellement. En pratique, la tension délivrée par le calorimètre peut être décalée du zéro, même en l'absence de rayonnement incident, de sorte qu'il faut prévoir un moyen pour corriger ce décalage. Sur la figure 5, la courbe 100 montre l'évolution de la tension réelle délivrée par le calorimètre sans correction et la courbe 102 l'évolution de la tension avec correction. Cette dernière (dite quelquefois "correction d'offset") peut intervenir dès que la tension à vide délivrée par le calorimètre atteint un seuil +Vs ou -Vs. C'est ce qui intervient au point 103 de la courbe 102. Cette correction s'effectue pendant une période de temps dite de stabilisation St, qui précède et qui suit chaque intervalle de mesure. Une impulsion de synchronisation 104 indique que l'appareil est prêt pour la mesure. Une période de mesure M s'instaure alors, pendant laquelle le signal est échantillonné, par exemple en 1024 points. La fréquence d'échantillonnage n'est pas nécessairement constante tout au long de l'intervalle de mesure. On peut, par exemple, utiliser une fréquence $f_0$ relativement basse lorsque l'évolution de la tension est lente, c'est-à-dire avant l'arrivée de l'impulsion de rayonnement sur le calorimètre et longtemps après sa cessation, et une fréquence $f_1$ supérieure à $f_0$ dans l'intervalle de temps où la tension varie rapidement, c'est-à-dire pratiquement pendant la phase de croissance et de passage par le maximum. Les fréquences $f_0$ et $f_1$ sont de l'ordre de quelques Hertz ou quelques dizaines de Hertz. Les intervalles de temps définissant ces différents échantillonnages sont comptés à partir de l'impulsion de synchronisation 104.

La figure 6 représente un mode particulier de réalisation d'un circuit de traitement du signal délivré par le calorimètre 20 de l'invention équipé de sa résistance d'étalonnage 8. Le signal délivré par le calorimètre est appliqué à un amplificateur 114 à gain fixe (par exemple 50) puis à deux amplificateurs 116, 118 à gain ajustable par un circuit 120. Ces gains sont par exemple 1, 10, 100, 1000 pour le premier amplificateur et 1, 2, 5 pour le second. Un circuit de compensation de décalage 122 est connecté en parallèle sur les amplificateurs 116 et 118. C'est à la sortie de l'amplificateur 118 que l'on trouve un signal tel que celui de la courbe 102 de la figure précédente.

Le circuit comprend encore un convertisseur tension-fréquence 124 qui est chargé de convertir la tension qu'il reçoit en un signal d'amplitude constante mais de fréquence proportionnelle à l'amplitude du signal reçu. La fréquence peut varier entre 0 et 300 kHz. Le circuit comprend encore un circuit d'identification de voie 126. Un coupleur optoélectronique 130 reçoit les différents signaux provenant des diverses voies et les transmet vers des organes de traitement numérique. Ce coupleur assure un isolement galvanique entre la partie amont comprenant le calorimètre et la partie aval comprenant les moyens de traitement. Les signaux délivrés par le coupleur 130 sont acheminés par des connexions 132 vers un circuit 134 qui est un convertisseur fréquence-numérique. Un tel circuit convertit la fréquence qu'il reçoit en un échantillon directement codé en numérique, par exemple sur 12 bits. Ce circuit réalise en même temps l'échantillonnage à une fréquence qui est déterminée par un circuit de rythme 136. C'est ce circuit qui permet d'obtenir 1024 échantillons, avec une fréquence appropriée. Ces échantillons transitent par un bus de données 138 vers une mémoire 140, laquelle est adressée par une mémoire 142 à travers un bus d'adresses 144. Il peut exister également une mémoire de test 143. Le bus de données 138 est relié enfin à un calculateur 150 qui traite les échantillons numériques selon divers procédés (calcul de la valeur crête, calcul de la surface sous la courbe, etc...).

Le circuit représenté comprend enfin un circuit 152 de génération d'une énergie électrique destinée à être appliquée à la résistance 8 aux fins d'étalonnage du calorimètre. En outre, un circuit 154 permet de mesurer l'énergie réellement appliquée à la résistance d'étalonnage. Cette énergie est typiquement de quelques dizaines de millijoules.

Le calorimètre objet de l'invention présente plusieurs avantages dont le principal est que l'étalonnage est fiable et facilement reproductible, permettant de simuler de façon quasi parfaite un dépôt d'énergie dans l'élément absorbant. Comme on l'a vu plus haut, ceci vient du fait que la résistance d'étalonnage est en contact avec la face interne de l'élément absorbant sur une grande partie de la face interne de celui-ci et dans une zone non occupée par la thermopile. La chaleur dégagée dans la résistance est donc transmise rapidement dans l'élément absorbant et chauffe la masse de celui-ci avant d'atteindre la thermopile : l'effet est donc le même que lorsque la face externe de l'élément absorbant est frappée par un rayonnement, pour une énergie déposée égale. On peut donc étalonner ce calorimètre sans faire toutes les corrections qui étaient nécessaires avec les dispositifs de l'art antérieur. De plus, comme cette résistance est un revêtement déposé sur la face interne de l'élément absorbant, elle est en contact direct, donc en excellent contact thermique, avec une grande partie de la surface de cette face interne et il n'y a pas de risque de décollement. Dans les dispositifs de l'art antérieur, cette résistance est un fil mince collé sur l'élément absorbant. La transmission de chaleur est moins bonne car la surface de contact est très faible (elle correspond à une génératrice du fil) et il y a souvent une pellicule de colle entre le fil et la surface sur laquelle il est placé : en effet, ce précollage est nécessaire pour maintenir le fil avant de le recouvrir de la couche de colle définitive. Il est à noter également que la colle peut se détériorer au cours du temps, et le fil peut se décoller par endroits : le contact thermique est alors moins bon. Tous ces inconvénients sont éliminés avec la présente invention.

Un autre avantage du calorimètre objet de l'invention est qu'il présente une grande sensibilité notamment grâce à la faible capacité calorifique de la partie chaude de la thermopile vis-à-vis de celle de l'élément absorbant. De plus, l'assemblage des éléments constitutifs essentiels du calorimètre est une opération facilement reproductible. Enfin, le calorimètre selon l'invention peut être appliqué à la mesure de l'énergie transportée par n'importe quel rayonnement électromagnétique ou flux de particules.

**Revendications**

1. Calorimètre servant à mesurer l'énergie transportée par un rayon comprenant:
   – un élément absorbant (2), apte à absorber ledit rayonnement, ayant une face externe (3) exposée à ce rayonnement et une face interne (9), cet élément subissant une augmentation de température lors de l'interaction avec ledit rayonnement;
   – des moyens (10) pour mesurer cette augmentation de température, ces moyens de mesure occupant une partie de la surface de la face interne (9) de l'élément absorbant (2); et
   – une résistance d'étalonnage simulant un apport d'énergie sur la face interne (9) de l'élément absorbant (2),
   caractérisé en ce que les moyens de mesure (10) sont en contact avec ladite face (9) et en ce que la résistance d'étalonnage se présente sous la forme d'un revêtement (8) en matériau résistif déposé sur la partie de la surface de la face interne (9) de l'élément absorbant (2) non utilisée par les moyens de mesure (10), ce revêtement (8) étant en contact direct avec ladite face interne (9) de l'élément absorbant (2) sur au moins 50% de la surface de celle-ci.

2. Calorimètre selon la revendication 1, caractérisé en ce que le revêtement (8) est en contact direct avec ladite face interne (9) de l'élément absorbant (2) sur au moins 70% de la surface de celle-ci.

3. Calorimètre selon la revendication 2, caractérisé en ce que le revêtement (8) est en contact direct avec ladite face interne (9) de l'élément absorbant (2) sur environ 80% de la surface de celle-ci.

4. Calorimètre selon la revendication 1, caractérisé en ce que le dépôt résistif d'étalonnage (8) comprend au moins une bande continue homogène, cette bande résistive pouvant être alimentée en courant et ayant un rapport longueur sur largeur de l'ordre de 100.

5. Calorimètre selon la revendication 1, caractérisé en ce que le matériau constitutif du dépôt résistif d'étalonnage (8) comprend au moins une encre conductrice apte à être polymérisée.

6. Calorimètre selon la revendication 1, caractérisé en ce que les moyens pour mesurer l'augmentation de température de l'élément absorbant (2) comprennent :
   – au moins une thermopile (10) ayant une face de mesure (11) en contact avec la face interne (9) de l'élément absorbant (2) et une face de référence (13), cette thermopile (10) occupant au plus 20% de la surface de la face interne (9) de l'élément absorbant (2),
   – des moyens pour maintenir la face de référence (13) de la thermopile (10) à une température de référence, et

– des moyens pour mesurer la tension aux bornes de la thermopile (10) engendrée lors de l'interaction du rayonnement et de l'élément absorbant (2).

7. Calorimètre selon la revendication 6, caractérisé en ce que la thermopile (10) est une thermopile semiconductrice.

8. Calorimètre selon la revendication 6, caractérisé en ce que les moyens pour maintenir la face de référence (13) de la thermopile (10) à une température de référence comprennent un élément (12) ayant une face externe (15) en cont-ct avec ladite face de référence (13) et une face interne (17), cet élément (12) ayant une masse au moins cinq fois supérieure à celle de la thermopile (10).

9. Calorimètre selon la revendication 1, caractérisé en ce que l'élément absorbant (2) comprend :
– une première couche (4) d'un marériau apte à absorber le rayonnement ayant une face externe (3) exposée au rayonnement et une face interne (5); et
– une seconde couche (6) d'un matériau de conduction thermique latérale disposée entre la première couche (4) et la thermopile (10) et en contact avec la face interne (5) de la première couche (4) et avec la face de mesure (11) de la thermopile (10).

10. Calorimètre selon la revendication 6, caractérisé en ce qu'il comprend une pluralité de thermopiles (10) ayant chacune une face de mesure (11) et une face de référence (13), la face de mesure (11) étant en contact avec la face interne (9) de l'élément absorbant, l'ensemble des thermopiles (10) couvrant au plus 20% de la surface interne (9) de l'élément absorbant (2).

11. Calorimètre servant à mesurer l'énergie transportée par un rayonnement comprenant :
– un élément absorbant (2), apte à absorber ledit rayonnement, ayant une face externe (3) exposée à ce rayonnement et une face interne (9), cet élément subissant une augmentation de température lors de l'interaction avec ledit rayonnement;
– des moyens (10) pour mesurer cette augmentation de température, ces moyens de mesure occupant une partie de la surface de la face interne (9) de l'élément absorbant (2); et
– une résistance d'étalonnage simulant un apport d'énergie sur la face interne (9) de l'élément absorbant (2),
caractérisé en ce que l'élément absorbant (2) présente du côté de sa face interne (9) une couche isolante mince, les moyens de mesure (10) sont en contact avec ladite couche isolante mince et la résistance d'étalonnage se présente sous la forme d'un revêtement (8) en matériau résistif déposé sur la partie de la surface de ladite couche isolante mince non utilisée par les moyens de mesure, ce revêtement étant en contact avec ladite couche isolante mince sur au moins 50% de la surface de celle-ci.

12. Procédé de réalisation d'un calorimètre selon la revendication 1, caractérisé en ce que la résistance (8) est déposée par sérigraphie.

13. Procédé de réalisation d'un calorimètre selon la revendication 9, caractérisé en ce que les première et seconde couches de l'élément absorbant (2) sont assemblées par une couche de colle thermoconductrice déposée par sérigraphie.

14. Application du calorimètre selon la revendication 1 à la mesure de l'énergie photonique impulsionnelle transportée par un rayonnement ayant une longueur d'onde allant de 0,3 µm à 2 µm.

**Claims**

1. Calorimeter for measuring the energy transported by radiation comprising an absorbing element (2) able to absorb said radiation having an outer face (3) exposed to said radiation and an inner face (9), said element being exposed to a temperature increase during the interaction with said radiation; means (10) for measuring this temperature rise, said measuring means using part of the surface of the inner face (9) of the absorbing element (2); and a calibration resistance simulating a supply of energy on the inner face (9) of the absorbing element (2), characterized in that the measuring means (10) are in contact with said inner face (9) and in that the calibration resistance is in the form of a resistive material coating (8) deposited on that part of the surface of the inner face (9) of the absorbing element (2) not used by the measuring means (10), said coating (8) being in direct contact with said outer face (9) of the absorbing element (2) over at least 50% of the surface thereof.

2. Calorimeter according to claim 1, characterized in that the coating (8) is in direct contact with the inner face (9) of the absorbing element (2) over at least 70% of the surface thereof.

3. Calorimeter according to claim 2, characterized in that the coating (8) is in direct contact with said inner face (9) of the absorbing element (2) over approximately 80% of the surface thereof.

4. Calorimeter according to claim 1, characterized in that the resistive calibration deposit (8) comprises at least one homogeneous continuous strip, which can be supplied with current and which has a length to width ratio of approximately 100.

5. Calorimeter according to claim 1, characterized in that the constituent material of the resistive calibration deposit (8) comprises at least one conductive ink which can be polymerized.

6. Calorimeter according to claim 1, characterized in that the means for measuring the temperature rise of the absorbing element (2) comprise at least one thermopile (10) having a measuring face (11) in contact with the inner face (9) of the absorbing element (2) and a reference face (13), said thermopile (10) occupying at the most 20% of the surface of the inner face (9) of the absorbing element (2), means for maintaining the reference face (13) of the thermopile (10) at a reference temperature and means for measuring the voltage at the terminals of the thermopile (10) produced during the interaction of the radiation and the absorbing element (2).

7. Calorimeter according to claim 6, characterized in that the thermopile (10) is a semiconductor thermopile.

8. Calorimeter according to claim 6, characterized in that the means for maintaining the reference face (13) of the thermopile (10) at a reference temperature comprise an element (12) having an outer face (15) in contact with said reference face (13) and an inner face (17), said element (12) having a mass which is at least five times greater than that of the thermopile (10).

9. Calorimeter according to claim 1, characterized in that the absorbing element (2) comprises a first coating (4) of a material able to absorb the radiation having an outer face (3) exposed to the radiation and an inner face (5) and a second coating (6) of a lateral heat conduction material placed between the first coating (4) and the thermopile (10) and in contact with the inner face (5) of the first coating (4) and with the measuring face (11) of the thermopile (10).

10. Calorimeter according to claim 6, characterized in that it comprises a plurality of thermopiles (10), each having a measuring face (11) and a reference face (13), the measuring face (11) being in contact with the inner face (9) of the absorbing element, the assembly of the thermopiles (10) covering at the most 20% of the inner surface (9) of the absorbing element (2).

11. Calorimeter for measuring the energy transported by radiation comprising an absorbing element (2) able to absorb said radiation and having an outer face (3) exposed to said radiation and an inner face (9), said element undergoing a temperature increase during the interaction with said radiation, means (10) for measuring said temperature increase, said measuring means occupying part of the surface of the inner face (9) of the absorbing element (2) and a calibration resistance simulating a supply of energy on the inner face (9) of the absorbing element (2), characterized in that the absorbing element (2) has on the side of its inner face (9) a thin insulating film, the measuring means (10) being in contact with said insulating film and the calibration resistance is in the form of a layer (8) of resistive material deposited on that part of the surface of said insulating film not used by the measuring means, said layer being in contact with said insulating film over at least 50% of the surface thereof.

12. Process for producing a calorimeter according to claim 1, characterized in that the resistance (8) is deposited by screen process printing.

13. Process for producing a calorimeter according to claim 9, characterized in that the first and second coatings of the absorbing element (2) are assembled by a thermoconductive glue coating deposited by screen process printing.

14. Application of the calorimeter according to claim 1 to measuring pulse-type photon energy transported by radiation having a wavelength between 0.3 and 2 µm.

**Patentansprüche**

1. Kalorimeter zum Messen von durch Strahlung übertragener Energie mit:
– einem Absorptionselement (2), das geeignet ist, die Strahlung zu absorbeiren, mit einer äußeren Seite (3), die dieser Strahlung ausgesetzt ist, und einer inneren Seite (9), wobei dieses Element eine Temperaturerhöhung im Falle einer Wechselwirkung mit der Strahlung erfährt;
– einer Vorrichtung (10) zum Messen dieser Temperaturerhöhung, wobei diese Meßvorrichtung einen Teil der Oberfläche der inneren Seite (9) des Absorptionselements (2) einnimmt; und
– einem Widerstandsnormal, das einen Energiezufluß auf die innere Seite (9) des Absorptionselements (2) simuliert,
dadurch gekennzeichnet, daß die Meßvorrichtung (10) in Verbindung mit der Innenseite (9) steht und daß das Widerstandsnormal sich in der Form einer Verkleidung (8) aus einem Widerstandsmaterial darstellt, das auf einem Teil der Oberfläche der Innseite (9) des Absorptionselements, die nicht von der Meßvorrichtung (10) gebraucht wird, abgescheiden wird, wobei diese Verkleidung (8) In direkter Verbindung mit der Innenseite (9) des Absorptionselements (2) auf wenigstens 50% der Oberfläche dieser steht.

2. Kalorimeter nach Anspruch 1, dadurch gekennzeichnet, daß die Verkleidung (8) in direkter Verbindung mit der Innenseite (9) des Absorptionselements (2) auf wenigstens 70% der Oberfläche dieser steht.

3. Kalorimeter nach Anspruch 2, dadurch gekennzeichnet, daß die Verkleidung (8) in direkter Verbindung mit der Innenseite (9) des Absorptionselements (2) auf wenigstens 80% der Oberfläche dieser steht.

4. Kalorimeter nach Anspruch 1, dadurch gekennzeichnet, daß die Abscheidung des Widerstandnormals (8) wenigstens ein kontinuierliches, homogenes Band umfaßt, wobei dieses Widerstandsband mit Strom versorgt werden kann und ein Verhältnis von Länge zu Breite in der Größenordnung von 100 besitzt.

5. Kalorimeter nach Anspruch 1, dadurch gekennzeichnet, daß das Material, das die Abscheidung des Widerstandsnormals (8) bildet, wenigstens eine leitfähige Tinte umfaßt, die geeignet ist, polymerisiert zu werden.

6. Kalorimeter nach Anspruch 1, dadurch gekennzeichnet, daß die Vorrichtung zum Messen der Temperaturerhöhung des Absorptionselements (2) umfaßt:
– wenigstens ein Thermoelement (10), das eine Meßfläche (11), die mit dem Absorptionselement (2) In Verbindung steht, und eine Referenzfläche (13) besitzt, wobei dieses Thermoelement höchstens 20% der Oberfläche der Innenseite (9) des Absorptionselements (2) bedeckt,
– eine Vorrichtung, um die Referenzfläche (13) des Thermoelements (10) auf einer Referenztemperatur zu halten, und
– eine Vorrichtung zum Messen der Spannung an den Anschlußklemmen des Thermoelements (10), die durch die Wechselwirkung der Strahlung mit dem Absorptionselement (2) erzeugt wird.

7. Kalorimeter nach Anspruch 6, dadurch gekennzeichnet, daß das Thermoelement (10) ein halbleitendes Thermoelement ist.

8. Kalorimeter nach Anspruch 6, dadurch gekennzeichnet, daß die Vorrichtung zum Halten der Referenzfläche (13) des Thermoelements (10) auf einer Referenztemperatur ein Element (12) mit einer Außenfläche (15), die mit der Referenzfläche (13) in Verbindung steht, und einer Innenfläche (15) umfaßt, wobei dieses Element (12) eine wenigstens fünf mal größere Masse besitzt als das Thermoelement (10).

9. Kalorimeter nach Anspruch 1, dadurch gekennzeichnet, daß das Absorptionselement (2) umfaßt:
- eine erste Schicht (4) aus einem Material, das geeignet ist die Strahlung zu absorbieren, mit einer äußeren Fläche (3), die der Strahlung ausgesetzt ist, und einer inneren Fläche (5); und
- eine zweite Schicht (6) aus einem lateral thermisch leitfähigen Material, das zwischen der ersten Schicht (4) und dem Thermoelement (10) angeordnet ist und mit der inneren Fläche (5) der ersten Schicht (4) und der Meßfläche (11) des Thermoelements (10) in Verbindung steht.

10. Kalorimeter nach Anspruch 6, dadurch gekennzeichnet, daß es eine Mehrzahl von Thermoelementen (10) umfaßt, die jeweils eine Meßflache (11) und eine Referenzfläche (13) besitzen, wobei die Meßfläche (11) mit der Innenseite (9) des Absorptionselements in Verbindung steht, wobei die Gesamtheit der Thermoelemente höchstens 20% der Innenseite (9) des Absorptionselements (2) bedeckt.

11. Kalorimeter zum Messen von Strahlung übertragener Energie mit:
- einem Absorptionselement (2), das geeignet ist, die Strahlung zu absorbieren, mit einer äußeren Seite (3), die dieser Strahlung ausgesetzt ist, und einer inneren Seite (9), wobei dieses Element eine Temperaturerhöhung im Falle einer Wechselwirkung mit der Strahlung erfährt;
- einer Vorrichtung (10) zum Messen dieser Temperaturerhöhung, wobei diese Meßvorrichtung einen Teil der Oberfläche der inneren Seite (9) des Absorptionselements (2) einnimmt; und
- einem Widerstandsnormal, das einen Energiezufluß auf die innere Seite (9) des Absorptionselements (2) simuliert, dadurch gekennzeichnet, daß das Absorptionselement (2) auf der Seite seiner Innenseite (9) eine dünne Isolierschicht aufweist, wobei die Meßvorrichtung (10) mit der dünnen Isolierschicht in Verbindung steht und das Widerstandsnormal sich in der Form einer Verkleidung (8) aus Widerstandsmaterial darstellt, das auf dem Teil der Oberfläche der dünnen Isolationsschicht abgeschieden ist, die nicht von der Meßvorrichtung eingenommen wird, wobei diese Verkleidung in Verbindung mit der dünnen Isolationsschicht auf wenigsten 50% der Oberfläche dieser steht.

12. Verfahren zur Herstellung eines Kalorimeters nach Anspruch 1, dadurch gekennzeichnet, daß der Widerstand (8) durch Siebdruck abgeschieden wird.

13. Verfahren zur Herstellung eines Kalorimeter nach Anspruch 9, dadurch gekennzeichnet, daß die erste und die zweite Schicht des Absorptionselements (2) durch eine wärmeleitende Klebeschicht verbunden sind, die durch Siebdruck abgeschieden ist.

14. Verwendung des Kalorimeters nach Anspruch 1 zum Messen pulsförmiger Photonenenergie, die durch eine Strahlung mit einer Wellenlänge von 0,3 µm bis 2 µm übertragen wird.

FIG. 1

FIG. 2

FIG. 3

FIG. 4

FIG. 5

EP 0 231 695 B1

FIG. 6

FIG. 7a

FIG. 7b

FIG. 8a

FIG. 8b

FIG. 9a

FIG. 9b